# EUROPÄISCHE PATENTANMELDUNG

(11) **EP 2 192 051 A1**
(43) Veröffentlichungstag der Anmeldung: **02.06.2010**
(21) Anmeldenummer: 09014308.2
(22) Anmeldetag: 16.11.2009
(51) Int. Cl.: B65D 75/42, B65D 75/44

(54) **Abgepacktes Gewürz**

(30) Priorität: 26.11.2008 DE 202008015685 U
(71) Anmelder: Dörrich, Markus, 3195 Kernhof (AT)
(72) Erfinder: Dörrich, Markus, 3195 Kernhof (AT)
(74) Vertreter: Laufhütte, Dieter

(57) **Zusammenfassung**

Die vorliegende Erfindung betrifft ein abgepacktes Gewürz zum Würzen von Speisen, das als fertige Gewürzmischung derart portioniert in einem Gebinde abgepackt ist, dass es einer vorbestimmten Menge einer zur würzenden Speise entspricht.

## Beschreibung

Die Erfindung betrifft ein Gewürz zum Würzen von Speisen.

Unter Gewürzen versteht man allgemein Stoffe, die der Geschmacksverbesserung von Speisen dienen oder die Bekömmlichkeit verbessern. Üblicherweise bestehen Gewürze aus Pflanzen oder Pflanzenteilen, die frisch, getrocknet oder bearbeitet verwendet werden, beispielsweise Blätter, wie Küchenkräuter, Lorbeerblätter, etc., Blüten oder Blütenteile, wie Gewürznelken oder Kapern, Rinde, gemahlen wie bei Zimt, Pflanzenwurzeln, wie Knoblauch, Ingwer, Früchte oder Samen der Pflanzen, wie beispielsweise Muskatnuß, Pfeffer, etc., Saft von Pflanzen wie Zucker, Wein, Essig, etc. oder auch ganze Teile von Pflanzen, wie beispielsweise Kümmel.

Häufig werden Gewürzzubereitungen verwendet, die aus Mischungen verschiedener Gewürze bestehen. Neben einfachen Gewürzmischungen werden auch Gewürzsalze verwendet. Darunter versteht man streufähige Mischungen aus Speisesalz und Gewürzen, getrockneten Kräutern und anderen würzenden Zutaten, wie beispielsweise auch Speisewürze, Glutamat oder Aromastoffe. Nach dem Deutschen Lebensmittelbuch muß Gewürzsalz mindestens 40% Salz und 15% Gewürz enthalten. Gängige Gewürzsalze sind Kräutersalz, Knoblauchsalz, Zwiebelsalz und Selleriesalz. Auch Universalmischungen wie "Ideal-Würze", Hähnchen-Würzsalz, etc. sind bekannt.

Diese herkömmlichen Gewürzsalzmischungen werden in Spendern, Beuteln, Dosen oder dergleichen abgefüllt und in dieser Form an den Verbraucher abgegeben.

Der Verbraucher muß nun die für die jeweils zuzubereitende Speise eine bestimmte Menge des Gewürzes aus den Spendern, Beuteln oder Dosen zudosieren. Dabei verläßt er sich auf seine eigene Intuition oder Erfahrung. Im Unterschied zu einem professionellen Koch verfügt der übliche Verbraucher aber nicht über eine hinreichende Kenntnis, entsprechende Gewürzsalzmischungen richtig zu dosieren. Insbesondere bereitet es Schwierigkeiten, die richtige Dosierung immer wieder zu reproduzieren.

Aufgabe der vorliegenden Erfindung ist es, ein Gewürz zu schaffen, dass eine reproduzierbaren Geschmack bei der Speisenzubereitung ermöglicht.

Erfindungsgemäß wird diese Aufgabe durch die Kombination der Merkmale des Anspruchs 1 gelöst.

Demnach wird eine fertige Gewürzmischung derart portioniert in einem Gebinde abgepackt, dass es einer vorbestimmten Menge einer zur würzenden Speise entspricht.

Diese Lösung hat eine Reihe von Vorteilen. Zunächst ist die Gewürzmischung immer in einem festen Gebinde in einer vorbestimmten Menge abgepackt. Es handelt sich also um eine geschlossene Verpackung, die ein Ausdunsten des Gewürzaromas sicher verhindert. Des weiteren ist beim Abfüllen der Gewürze keine Dosierhilfe erforderlich. Eine Berührung der offenen Würzmischung mit Keimen wird weitgehend ausgeschlossen, da man zum Aufbringen der Gewürzmischung nur das Gebinde anfassen muß und die Gewürzmischung ausstreuen kann. Vorteilhaft ist mit dem erfindungsgemäßen Gewürz eine reproduzierbares Würzen möglich. Ein Überwürzen von Speisen wird wirksam verhindert. Darüber hinaus ist ein Sicherheitsaspekt gegeben, da das Verfallsdatum des jeweiligen Gewürzes eindeutig auf dem Gebinde gekennzeichnet werden kann.

Vorteilhafte Ausgestaltungen der Erfindung ergeben sich aus den sich anschließenden Unteransprüchen.

Vorteilhaft läßt sich das Gebinde vor der einmaligen Verwendung des Gewürzes luftdicht verschließen. Insbesondere hierdurch ist ein Ausrauchen des Gewürzes vor seiner Verwendung zum Würzen einer Speise sicher verhindert.

Als Gebinde kann vorteilhaft ein Sachet oder Stick verwendet werden.

Das Gewürz kann aus einer Gewürzsalzmischung bestehen, in der verschiedene Gewürze mit Salz gemischt werden. Als Salz kann beispielsweise Meersalz oder auch jedes beliebige andere Salz eingesetzt werden. Besonders vorteilhaft kann aber auch das sogenannte Himalajasalz verwendet werden. Dieses hat den Vorteil, dass es besonders rein ist. Es hat eine besondere Konsistenz und einen besonderen Geschmack und umfaßt neben NaCl noch folgende Inhaltsstoffe: Magnesium, Mangan, Chrom, Bromid, Kalium, Kupfer, Sulfat, Hydrogencarbonat, Carbonat sowie Eisen.

Besonders vorteilhaft ist es, wenn das erfindungsgemäße Gewürz auf vorbestimmte Gerichte abgestimmt ist. So läßt sich hier eine bestimmte Gewürzmischung, z. B. einem Fischwürzsalz zum Würzen von Fisch oder aber auch ein asiatisches Salz zum Würzen einer asiatischen Speise vorkonfektionieren.

Vorteilhaft ist das Gewürz als fließfähiges Pulver in das Gebinde eingefüllt.

Besonders vorteilhaft können mehrere Gebinde zu einer Verpackungseinheit zusammenfaßbar sein. Dabei können beispielsweise mehrere Sachets vorteilhaft derart miteinander verbunden sein, dass sie eine Faltbox bilden.

Im folgenden werden einige Ausführungsbeispiele der Erfindung dargestellt.

So kann bei Zubereitung eines Steaks davon ausgegangen werden, dass man üblicherweise eine bestimmte Menge Steak, vorteilhaft 200g Steak pro Person vorsieht. In dem hier dargestellten Ausführungsbeispiel wird eine Steakgewürzsalzmischung in einer Menge von 5g in einem Sachet abgefüllt. Zum Würzen einer Steakportion in einer Menge von 200g wird das luftdicht verschlossene Sachet aufgerissen und das fließfähige pulverförmige Steakgewürzsalz wird auf das Steak aufgestreut. Durch die genaue Portionierung ist das Steak geschmacklich ideal gewürzt, als wäre es von einem professionellen Koch zubereitet worden.

In einem zweiten Beispiel wird eine Portion Fischfilet für eine Person mit 220g angenommen. Zum Würzen einer Portion wird ein Sachet mit Fischwürzsalz verwendet, in dem 3,5g des Fischwürzsalzes abgepackt sind. Auch durch Zudosierung dieses einen Sachets pro Portion wird ein idealer Geschmack erreicht.

Als drittes Beispiel wird eine asiatische Pfanne für vier Personen zubereitet. Zum Würzen dieser asiatischen Pfanne, die für vier Personen vorgesehen ist, werden vier Sachets verwendet, die jeweils eine asiatische Gewürzsalzmischung in einer Menge von 4g enthalten. Auch hier läßt sich ein ideales geschmackliches Ergebnis erreichen.

## Patentansprüche

1. Gewürz zum Würzen von Speisen,
**dadurch gekennzeichnet,**
**dass** es als fertige Gewürzmischung derart portioniert in einem Gebinde abgepackt ist, dass es einer vorbestimmten Menge einer zur würzenden Speise entspricht.

2. Gewürz nach Anspruch 1, **dadurch gekennzeichnet, dass** das Gebinde vor der einmaligen Verwendung des Gewürzes luftdicht verschlossen ist.

3. Gewürz nach Anspruch 1 oder 2, **dadurch gekennzeichnet, dass** als Gebinde ein Sachet oder Stick verwendet wird.

4. Gewürz nach einem der Ansprüche 1 bis 3, **dadurch gekennzeichnet, dass** es aus einer Gewürzsalzmischung bestehend aus einer Mischung verschiedener Gewürze mit Salz ist.

5. Gewürz nach Anspruch 4, **dadurch gekennzeichnet, dass** das Salz Himalajasalz ist.

6. Gewürz nach einem der Ansprüche 1-5, **dadurch gekennzeichnet, dass** es auf vorbestimmte Gerichte abgestimmt ist.

7. Gewürz nach einem der Ansprüche 1 bis 6, **dadurch gekennzeichnet, dass** es als fließfähiges Pulver in das Gebinde eingefüllt ist.

8. Gewürz nach einem der Ansprüche 1 bis 7, **dadurch gekennzeichnet, dass** mehrere Gebinde zu einer Verpackungseinheit zusammenfaßbar sind.

9. Gewürz nach Anspruch 8, **dadurch gekennzeichnet, dass** mehrere Sachets derart miteinander verbunden sind, daß sie eine Faltbox bilden.
